# FASCICULE DE BREVET EUROPEEN

(11) **EP 0 542 624 B1**
(45) Date de publication et mention de la délivrance du brevet: **21.06.1995**
(21) Numéro de dépôt: 92403048.9
(22) Date de dépôt: 12.11.1992
(51) Int. Cl.: F02K 1/70

(54) **Inverseur de poussée de turboréacteur à double flux**
Konfiguration einer Schubumkehrvorrichtung für ein Zweistrahltreibwerk
Thrust reverser configuration for a fan jet

(30) Priorité: 15.11.1991 FR 9114069
(43) Date de publication de la demande: 19.05.1993
(73) Titulaire: HISPANO-SUIZA, F-92213 Saint Cloud (FR)
(72) Inventeur: Bunel, Serge Patrick, F-76610 Le Havre (FR); Dubois, Claude Achille Germain, F-50380 Saint Pair (FR)
(74) Mandataire: Berrou, Paul

(56) Documents cités:
- EP-A- 0 365 425
- EP-A- 0 414 609

## Description

La présente invention concerne un inverseur de poussée de turboréacteur à double flux.

Dans ce type de turboréacteur comprenant un canal primaire de circulation des gaz dits de flux chaud constituant une veine principale d'éjection et un canal annulaire, coaxial au canal primaire, où circulent des gaz dits de flux froid, à la sortie par exemple d'une soufflante située à l'entrée du turboréacteur, et constituant une veine secondaire d'éjection, particulièrement lorsque le taux de dilution est élevé, l'inversion de poussée met en oeuvre principalement ou uniquement la dérivation du flux secondaire froid.

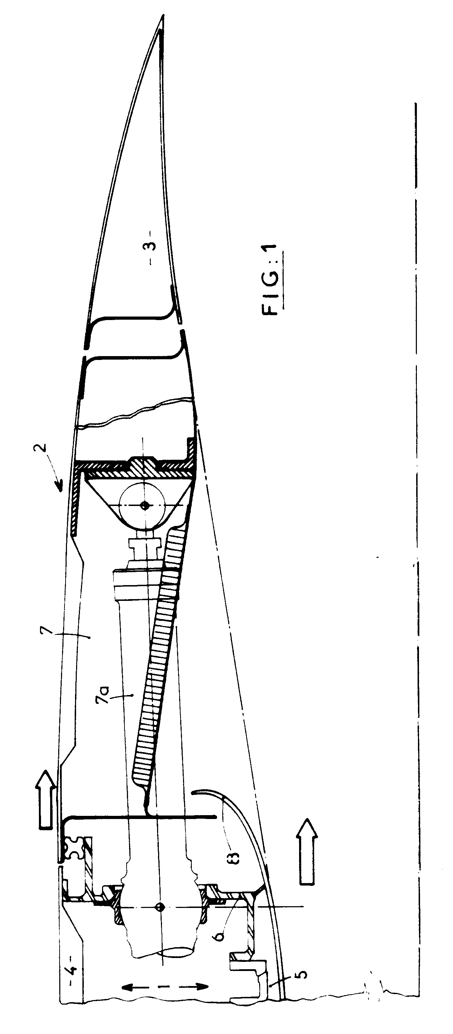

La figure 1 des dessins joints montre un exemple connu de réalisation d'un inverseur de poussée de ce type composé de trois parties principales, une partie fixe 1, située en amont, dans le prolongement de la paroi externe du canal de flux secondaire qui est délimité intérieurement par l'enveloppe de structure centrale du turboréacteur, une partie mobile 2 et une virole arrière fixe 3. Ladite partie fixe amont 1 comprend un panneau externe 4 de nacelle, un panneau interne 5 limitant extérieurement la veine du flux secondaire et un cadre avant 6 qui assure la jonction desdits panneaux 4 et 5. Ledit cadre 6 sert également de support au dispositif de commandes des déplacements de la partie mobile 2 qui est essentiellement composée d'un certain nombre d'éléments déplaçables, ou obstacles communément appelés portes 7, ce nombre pouvant varier en fonction des applications particulières, par exemple deux, trois ou quatre portes 7 formant un ensemble annulaire, éventuellement en coopération avec une partie fixe, selon le mode de montage de l'ensemble de propulsion constitué par le turboréacteur sur l'avion.

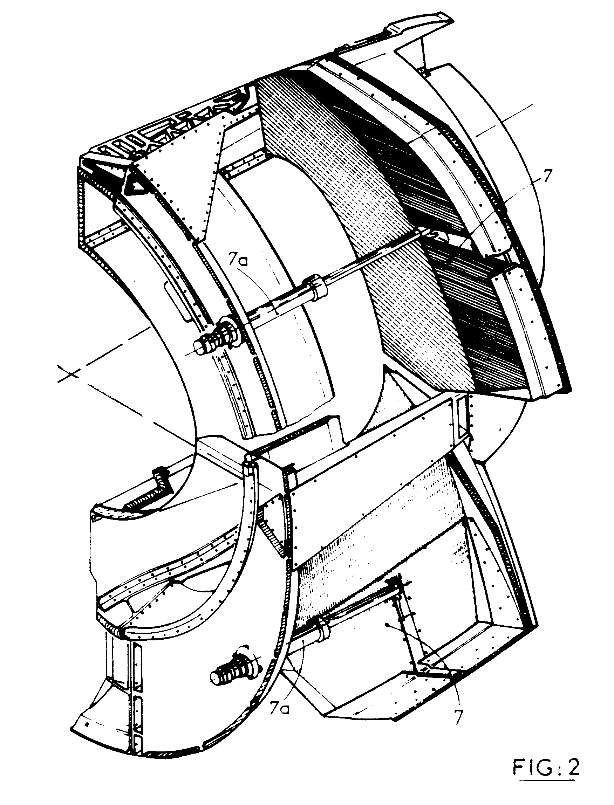

La figure 2 montre, selon une vue schématique partielle en perspective un exemple d'application d'un tel inverseur de poussée à un turboréacteur à double flux, l'inverseur comportant dans ce cas quatre portes 7 dont deux sont visibles sur la figure 2 et sont montrées ouvertes, correspondant à un fonctionnement en inversion de poussée. Chaque porte 7 est associée à un moyen de commande des déplacements tel qu'un vérin 7a.

Des exemples de réalisation de ce type d'inverseur de poussée de turboréacteur à portes basculantes sont décrits notamment par FR-A 2.618.853, FR-A 2.618.852, FR-A 2.621.082, FR-A 2.627.807, FR-A 2.634.251, FR-A 2.638.207 (correspondant à EP-A-0365425) et FR-A 2.651.021 dont est titulaire la demanderesse.

Il est par ailleurs connu, afin d'éviter une ouverture intempestive de porte d'inverseur susceptible de gêner un bon comportement de l'avion en dehors des phases d'approche, d'atterrissage ou de freinage, de prévoir au moyen de dispositifs connus en soi un verrouillage mécanique positif de la porte en position fermée. Il est cependant apparu souhaitable, notamment pour des applications sur appareils bimoteurs à longue distance, d'obtenir une auto-fermeture de la porte quels que soient l'état et la position des dispositifs normaux de fermeture et verrouillage. Par suite, le but de l'invention est d'apporter une solution à ces problèmes en conciliant les facilités de mise en oeuvre, tenant compte des impératifs de masse minimale, d'encombrement réduit qui sont des critères importants dans les applications aéronautiques concernées et de coût réduit, avec l'obtention des performances requises, aussi bien lors du fonctionnement en poussée directe en évitant les pertes aérodynamiques, que lors du fonctionnement en inversion de poussée en ménageant un pilotage adéquat des nappes du flux inversé. L'invention vise enfin particulièrement, en plus des choix technologiques assurant la fiabilité du matériel, à répondre de manière optimale aux conditions de sécurité en éliminant un risque d'ouverture intempestive d'éléments déplaçables tels que les portes d'inverseur en cas de déverrouillage accidentel.

Un des buts de l'invention est également la suppression de virole arrière 3 dans la réalisation connue d'inverseur de poussée telle que schématisée sur la figure 1.

Ces buts sont atteints, conformément à l'invention par un inverseur de poussée du type précité comportant des éléments mobiles caractérisé en ce qu'il comporte un anneau fixe sur lequel l'extrémité aval de ladite porte interne, en position fermée, prend appui avec interposition de moyens d'étanchéité et sur lequel une zone intermédiaire dudit panneau externe, en position fermée, prend également appui avec interposition de moyens d'étanchéité, ledit panneau externe comportant une partie aval d'extrémité libre s'étendant vers l'arrière au-delà dudit panneau fixe, l'articulation du point d'application de l'effort du moyen de commande des déplacements étant située sur ledit panneau externe, ladite articulation étant reliée par une biellette portant un galet d'extrémité susceptible de se déplacer le long d'un chemin de roulement disposé suivant une direction longitudinale sur la porte de manière que, lors du fonctionnement en inversion de poussée, l'obstacle au passage du flux dans ledit canal secondaire est constitué par ladite porte et l'orientation des nappes du flux inversé est assurée par la partie amont dudit panneau externe.

D'autres caractéristiques et avantages de l'invention seront mieux compris à la lecture de la description qui va suivre d'un mode de réalisation de l'invention, en référence aux dessins annexés sur lesquels :
- la figure 1 représente une demi-vue schématique en coupe longitudinale par un plan passant par l'axe de rotation d'un turboréacteur, d'un inverseur de poussée à portes pivotantes, en position fermée, d'un type connu et qui a fait précédemment l'objet d'une description,
- la figure 2 représente une vue partielle en perspective de l'inverseur de poussée représenté à la figure 1, en position déployée,

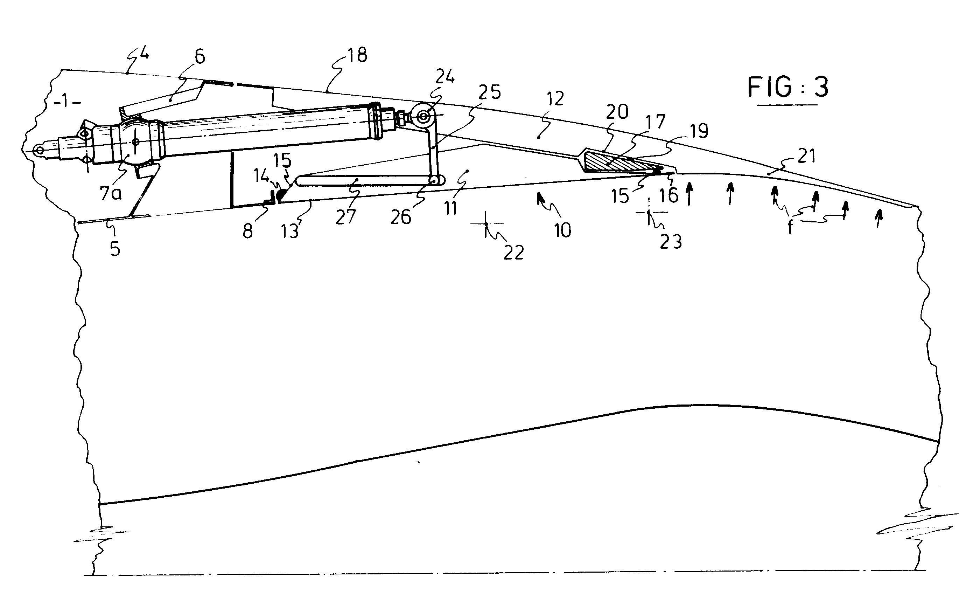

- la figure 3 représente, dans une vue analogue à celle de la figure 1, un inverseur de poussée selon un mode de réalisation de l'invention, dans une configuration correspondant à un fonctionnement en poussée directe,

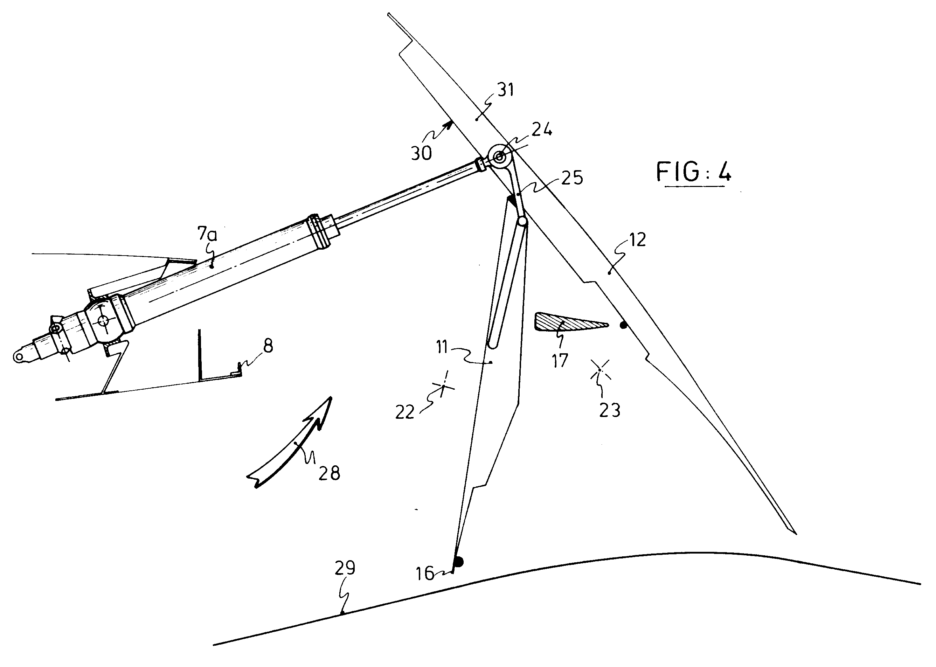

- la figure 4 représente dans une vue analogue à celles des figures 1 et 3, l'inverseur de poussée représenté sur la figure 3, dans une configuration correspondant à un fonctionnement en inversion de poussée.

Un inverseur de poussée de turboréacteur à double flux conforme à l'invention et susceptible d'effectuer dans les phases pertinentes de vol d'un avion l'inversion du flux secondaire du turboréacteur comporte, comme représenté sur les figures 1 et 2, une partie fixe amont 1 composée d'un panneau externe 4, d'un panneau interne 5, d'une structure de cadre avant 6 supportant les vérins 7a de commande des déplacements des éléments mobiles de l'inverseur, cette partie étant connue en soi et similaire à celle qui a été représentée sur la figure 1 précédemment décrite. Par contre, l'inverseur ne comporte plus, comme précédemment, une virole arrière fixe 3 ou cône arrière et l'organisation des portes ou éléments mobiles de l'inverseur est modifiée.

En effet, chaque élément mobile 10 est composé d'une porte interne 11 et d'un panneau externe 12. La surface interne 13 de la porte 11 est située, en position fermée, suivant une continuité aérodynamique adéquate avec la surface interne de la partie fixe 1 placée en amont, de manière à éviter toute perturbation dans les écoulements de la veine fluide. Ladite porte 11 est munie sur son pourtour de joints d'étanchéité. Notamment, un joint d'étanchéité 14 est interposé entre le bord amont 15 de la porte 11 et l'extrémité aval de la partie fixe amont 1 de l'inverseur portant le bord de déviation 8.

De même, un joint d'étanchéité 15 est également interposé entre le bord aval 16 de la porte 11 et un anneau fixe 17 relié à la partie fixe amont 1 de l'inverseur par des poutres longitudinales non représentées sur les dessins.

Le panneau externe 12 présente une surface externe 18 également située, en position fermée, en continuité aérodynamique avec la surface externe de la partie fixe 1 placée en amont.

Aucune étanchéité n'est prévue ni recherchée par contre entre ces deux éléments, de manière à laisser la pression ambiante extérieure s'exercer des deux côtés de la partie amont du panneau externe 12.

Cette partie amont est limitée du côté aval par un joint d'étanchéité 19 disposé entre ledit anneau fixe 17 et une zone 20 d'appui du panneau externe 12 sur l'anneau 17, en position fermée telle que représentée sur la figure 1. Au-delà de l'anneau fixe 17 et du bord aval de la porte interne 11, ledit panneau externe 12 se prolonge par une partie aval 21. Lors d'un fonctionnement en poussée directe, correspondant à la configuration de la figure 1, la pression de la veine fluide circulant dans le canal secondaire de flux froid exerce sur ladite partie aval 21 du panneau externe 12 des efforts symbolisés par les flèches f tendant à maintenir ledit panneau 12 fermé, ce qui assure aux éléments mobiles de l'inverseur de poussée une position dite "auto-rentrante" et prémunit ainsi contre tout risque d'ouverture intempestive en cas de défaillances de divers organes prévus par ailleurs et connus en soi, notamment les moyens de commande et verrous de blocage. La porte interne 11 et le panneau externe 12 sont respectivement fixés chacun sur des pivots latéraux indépendants solidaires des structures fixes de l'inverseur et qui ont été schématisés en 22 et 23, respectivement.

Le point d'application des efforts du vérin 7a de commande des déplacements des éléments mobiles 10 de l'inverseur est constitué par une articulation 24 à l'extrémité de la tige de vérin placée sur le panneau externe 12.

Sur ladite articulation 24 s'articule également une extrémité d'une biellette 25 dont l'autre extrémité porte un galet 26 lié à un chemin de roulement 27 solidaire de la porte interne 11 et sur lequel il est susceptible de se déplacer suivant une direction longitudinale.

La figure 2 montre schématiquement la configuration de l'inverseur obtenue lors du fonctionnement en inversion de poussée. L'action du vérin 7a a fait pivoter le panneau externe 12 autour des pivots 23, entraînant par l'intermédiaire de la biellette 25 le pivotement de la porte interne 11 autour des pivots 22. Le flux circulant dans le canal secondaire, symbolisé par la flèche 28, rencontre l'obstacle constitué par la porte interne 11 qui obture ledit canal, le bord aval 16 de ladite porte interne 11 venant se placer au voisinage de l'enveloppe externe 29 du turboréacteur qui forme la paroi radialement interne dudit canal secondaire. L'ouverture des éléments mobiles 10 dégage dans la paroi externe du canal secondaire un passage dit "puits d'inversion" à travers lequel le flux inversé 28 est dirigé. Le contrôle de l'orientation des nappes du flux inversé est assuré par la surface interne 30 de la partie amont 31 du panneau externe 12, associée à la position relative des pivots 22 de la porte interne 11 et des pivots 23 du panneau externe 12. On note dans les dispositions de l'invention que l'anneau fixe 17 dans la configuration d'inversion de poussée se trouve placé en position intermédiaire entre la porte interne 11 et le panneau externe 12.
La disposition du vérin 7a conforme à l'invention procure également l'avantage complémentaire de supprimer les effets néfastes sur la qualité et l'efficacité aérodynamique des écoulements fluides de la présence d'un passage de vérin sous forme de tunnel dans la porte 7 dans les réalisations connues antérieures telles que schématisées sur la figure 1.

## Revendications

1. Inverseur de poussée de turboréacteur à double flux comportant des éléments mobiles (10) susceptibles, en position fermée, de s'intégrer dans la paroi extérieure du canal annulaire du flux secondaire, constitués chacun d'un panneau externe (12) et d'une porte interne (11) reliés l'un à l'autre par des moyens de liaison (24-26) et susceptibles chacun de pivoter autour de pivots latéraux (22-23) indépendants portés par la structure fixe de l'inverseur sous l'action d'un moyen de commande des déplacements tels qu'un vérin (7a), et
caractérisé en ce qu'il comporte un anneau fixe (17) sur lequel l'extrémité aval de ladite porte interne (11), en position fermée, prend appui avec interposition de moyens d'étanchéité (15) et sur lequel une zone intermédiaire (20) dudit panneau externe (12) en position fermée, prend également appui avec interposition de moyens d'étanchéité (19), ledit panneau externe (12) comportant une partie aval (21) d'extrémité libre s'étendant vers l'arrière au-delà dudit anneau fixe (17), l'articulation (24) du point d'application de l'effort du moyen de commande (7a) des déplacements étant située sur ledit panneau externe (12), ladite articulation (24) étant reliée par une biellette (25) portant un galet (26) d'extrémité susceptible de se déplacer le long d'un chemin de roulement (27) disposé suivant une direction longitudinale sur la porte (11) de manière que, lors du fonctionnement en inversion de poussée, l'obstacle au passage du flux dans ledit canal secondaire est constitué par ladite porte interne (11) et l'orientation des nappes du flux inversé est assurée par la partie amont (31) dudit panneau externe (12).

2. Inverseur de poussée de turboréacteur selon la revendication 1 dans lequel les efforts f exercés par le flux circulant dans le canal secondaire, en position de poussée directe, sur la partie aval (21) uniquement du panneau externe (12) assurent un maintien en position fermée en l'absence de tout autre moyen de commande de manière à obtenir une position dite "rentrante" des éléments mobiles (10) de l'inverseur.

3. Inverseur de poussée de turboréacteur selon l'une des revendications 1 ou 2 dans lequel le pilotage des nappes du flux inversé est obtenu par le profil interne (30) du panneau externe (12) et grâce aux positions du panneau externe (12) et de la porte interne (11) déterminées par la position relative des pivots (22) de ladite porte interne (11) et des pivots (23) du panneau externe (12)

## Claims

1. A ,thrust reverser for a bypass turbojet engine comprising movable elements (10) adapted when closed to form part of the outer wall of the annular secondary flow path, each such element consisting of an outer panel (12) and an inner door (11) interconnected by connecting means (24-26) and each adapted to be pivoted around independent lateral pivots (22, 23) on the fixed structure of the reverser by actuating means such as a ram (7a),
characterised in that it comprises a fixed ring (17) on which the downstream end of the inner door (11) when in the closed position bears by way of sealing means (15) and on which an intermediate zone (20) of the outer panel (12) when in the closed position also bears by way of sealing means (19), the outer panel (12) comprising a downstream part (21) whose free end extends rearwardly beyond the fixed ring (17), the hinge (24) at the place where the force of the displacement-controlling means (7a) is applied being disposed on the outer panel (12), the hinge (24) being connected to a rod (25) carrying an end roller (26) adapted to move along a track (27) disposed lengthwise on the door (11), so that in reversed thrust operation the obstacle to the flow in the secondary channel is the inner door (11) and orientation of the layers of the reversed flow is provided by the upstream part (31) of the outer panel (12).

2. A thrust reverser according to claim 1 wherein the forces f exerted by the flow in the secondary channel in the forward thrust positiont act only on the downstream part (21) of the outer panel (12) and ensure maintenance of the closed position in the absence of any other actuating means so as to obtain an automatic return position of the movable elements (10) of the reverser.

3. A thrust reverser according to claim 1 or 2 wherein the layers of the reversed flow are guided by the inner profile (30) of the outer panel (12) and by virtue of the positions of the outer panel (12) and inner door (11) as determined by the relative position of the pivots (22) of the inner door (11) and the pivots (23) of the outer panel (12).

## Patentansprüche

1. Schubumkehrvorrichtung für ein Zweistrahltriebwerk mit bewegbaren Elementen (10), die in einer Schließstellung in einer Außenwand des Ringkanals des zweiten Strahls aufgenommen werden können, und jeweils aus einer Außenwand (12) und einer Innenklappe (11) bestehen, die miteinander durch Verbindungsmittel (24-26) verbunden sind und jeweils unter der Einwirkung einer Bedieneinrichtung für Verschiebungen, wie z.B. einem Stellzylinder (7a) um unabhängige Quer-Schwenkzapfen (22-23) schwenken können, die durch den festen Aufbau der Umkehrvorrichtung getragen sind, und dadurch **gekennzeichnet**,
daß sie einen festen Ring (17) aufweist, auf dem das stromabwärts gelegene Ende der Innenklappe (11) in der Schließstellung in Anlage Kommt, wobei sich Dichtungsmittel (15) dazwischen befinden, und auf dem ebenso ein Zwischenbereich (20) der Außenwand (12) in der Schließstellung in Anlage kommt, wobei sich Dichtungsmittel (19) dazwischen befinden, die Außenwand (12) einen freien stromabwärts gelegenen Endbereich (21) aufweist, der sich nach hinten über den festen Ring (12) hinaus erstreckt, wobei die Anlenkung (24) des Wirkungspunktes der Bedieneinrichtung (7a) zur Verschiebung auf der genannten Außenwand (12) liegt, und die Anlenkung (24) mit einem Federarm (25) verbunden ist, der eine Endrolle (26) trägt, die sich längs eines Abrollweges (27) bewegen kann, der in Längsrichtung auf der Klappe (11) derart vorgesehen ist, daß bei dem Schubumkehrbetrieb die Sperre für den Stromdurchgang in dem genannten zweiten Kanal durch die Innenklappe (11) gebildet ist und die Orientierung des umgekehrten Strömungsverlaufs durch den stromaufwärts gelegenen Abschnitt (31) der Außenwand (12) gewährleistet ist.

2. Schubumkehrvorrichtung für ein Strahltriebwerk nach Anspruch 1, bei dem die Kräfte (f), die in der direkten Schubstellung durch den im zweiten Kanal fließenden Strom auf den stromabwärts gelegenen Abschnitt (21) nur der Außenwand (12) ausgeübt werden, ein Halten in der Schließstellung ohne jegliche weitere Bedieneinrichtung gewährleisten, so daß eine "Einzieh"-Stellung der bewegbaren Elemente (10) der Umkehrvorrichtung erhalten wird.

3. Schubumkehrvorrichtung für ein Turbostrahltriebwerk nach einem der Ansprüche 1 oder 2, bei dem die Führung der Umkehrströmung durch das Innenprofil (30) der Außenwand (12) und aufgrund der Stellungen der Außenwand (12) und der Innenklappe (11) erhalten wird, die durch die relative Position der Schwenkzapfen (22) der Innenklappe (11) und der Schwenkzapfen (23) der Außenwand (12) festgelegt sind.
